# EUROPÄISCHE PATENTANMELDUNG

(11) **EP 4 570 473 A1**
(43) Veröffentlichungstag der Anmeldung: **18.06.2025**
(21) Anmeldenummer: 24190786.4
(22) Anmeldetag: 25.07.2024
(51) Int. Cl.: B29C 49/78, B29C 49/64, B29L 31/00

(54) **VORRICHTUNG UND VERFAHREN ZUR HERSTELLUNG VON BEHÄLTERN**

(30) Priorität: 11.12.2023 DE 102023134557
(71) Anmelder: Krones AG, 93073 Neutraubling (DE)
(72) Erfinder: Stopfer, Andreas, 93073 Neutraubling (DE); Aust, Robert, 93073 Neutraubling (DE); Kuen, Peter, 93073 Neutraubling (DE); Steiner, Andreas, 93073 Neutraubling (DE); Fischer, Simon, 93073 Neutraubling (DE); Boettcher, Benedikt, 93073 Neutraubling (DE); Senn, Konrad, 93073 Neutraubling (DE); Zoelfl, Markus, 93073 Neutraubling (DE)
(74) Vertreter: Grünecker Patent- und Rechtsanwälte PartG mbB

(57) **Zusammenfassung**

Die vorliegende Erfindung betrifft eine Vorrichtung zur Herstellung von Behältern, die umfasst: eine Steuerungseinrichtung, die dazu ausgebildet ist, zumindest einen Arbeitsparameter für die Herstellung zumindest eines ersten Behälters einzustellen, eine Messeinrichtung, die dazu ausgebildet ist, zumindest einen Behälterparameter des zumindest einen hergestellten ersten Behälters zu messen, um einen Messwert des zumindest einen Behälterparameters zu erhalten, eine Messkorrektureinrichtung, die dazu ausgebildet ist, den Messwert des zumindest einen Behälterparameters auf der Grundlage zumindest eines Modellparameters eines numerischen Modells zu korrigieren, und eine Performanceparameter-Ermittlungseinrichtung, die dazu ausgebildet ist, zumindest einen Performanceparameterwert auf der Grundlage des korrigierten zumindest einen Messwerts zu ermitteln. Weiterhin ist die Steuerungseinrichtung dazu ausgebildet, die Herstellung zumindest eines zweiten Behälters, der von dem zumindest einen ersten Behälter verschieden ist, auf der Grundlage des auf der Grundlage des ermittelten zumindest einen Performanceparameterwerts angepassten zumindest einen Arbeitsparameters zu steuern.

## Beschreibung

### Gebiet der Erfindung

Die vorliegende Erfindung betrifft das Gebiet der Herstellung von Behältern, insbesondere der modellbasierten Herstellung von Behältern.

### Stand der Technik

Abfüllanlagen für Getränke oder dergleichen umfassen mehrere hintereinander geschaltete Produktionseinheiten, wie beispielsweise Maschinen zur Herstellung von Behältern, (Form-) Füllmaschinen, Etikettiermaschinen und Verpackungsmaschinen.

Beispielsweise werden bei der Herstellung von etikettierten Kunststoffflaschen zunächst in einer Rotationsblasmaschine kontinuierlich aus Rohlingen Kunststoffflaschen erzeugt. Eine Blasmaschine nimmt die erwärmten Rohlinge, auch Vorformlinge genannt, in entsprechend ausgebildeten Blasformen auf, in denen Sie dann während des Umlaufs der Blasmaschine unter hohem Druck und mit hoher Temperatur zu Kunststoffflaschen aufgeblasen werden. Die so erzeugten Kunststoffflaschen werden dann gefüllt und etikettiert.

Allgemein sollen die fertiggestellten Behälter vorgegebenen Qualitätsanforderungen genügen, d.h. sie sollen vorgegebene Performanceparameterwerte (Qualitätsparameterwerte), wie etwa vorgegebene Werte für Topload, Burstpressure, Stresscrack, eine Materialverteilung und ein Sektionsgewicht, aufweisen. Die Performanceparameter dienen nicht nur der Qualitätskontrolle, sondern auch der Optimierung des Herstellungsprozesses durch Anpassen von Arbeitsparametern, etwa des Drucks, mit dem ein Kunststoffvorformling beaufschlagt wird, dem Zeitpunkt und der Zeitdauer der Druckbeaufschlagung und Bewegungsparameter einer Reckstange, mit der der Kunststoffvorformling gereckt wird.

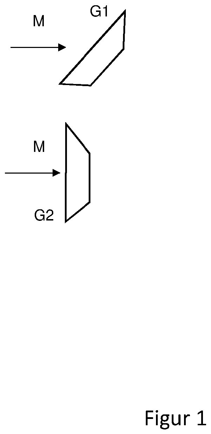

Die Performanceparameter sind nicht inline messbar, sondern werden auf der Grundlage von gemessenen Behälterparametern, wie etwa Wanddicken, Wanddickenprofilen und Boden- und Seitenwandinspektionsmessdaten, ermittelt. Die Messwerte für die Behälterparameter sind jedoch typischerweise nicht hinreichend verlässlich, da sie durch Störparameter, wie etwa unterschiedliche Oberflächen, Ausrichtungen und Geometrien der Behälter und variierender Absorptions-/Transmissionskoeffizienten des Behältermaterials, beeinflusst werden können. So kann beispielsweise, wie in Figur 1 veranschaulicht, die Genauigkeit von optischen oder Ultraschallmessverfahren zur Messung von Wanddicken durch ungleichmäßige Behältergeometrien in Messgebieten G1, auf die der Messstrahl M nicht senkrecht einfällt und in denen er somit mehr Material durchläuft als in Gebieten G2, auf die er senkrecht einfällt beeinträchtigt werden.

Es liegt somit der vorliegenden Erfindung eine Aufgabe dahingehend zugrunde, eine Vorrichtung und ein Verfahren zur Herstellung von Behältern, beispielsweise Kunststoff- oder Glasflaschen, bereitzustellen, in der der Herstellungsprozess auf der Grundlage genau ermittelter Performanceparameterwerte optimiert wird.

### Beschreibung der Erfindung

Die oben genannte Aufgabe wird gelöst durch Bereitstellen einer Vorrichtung zur Herstellung von Behältern (beispielsweise Kunststoffflaschen oder Glasflaschen), die eine Steuerungseinrichtung, die dazu ausgebildet ist, zumindest einen Arbeitsparameter für die Herstellung zumindest eines ersten Behälters einzustellen (und so auf der Grundlage des eingestellten zumindest einen Arbeitsparameter die Herstellung des zumindest eines ersten Behälters zu steuern), und eine Messeinrichtung, die dazu ausgebildet ist, zumindest einen Behälterparameter des zumindest einen hergestellten ersten Behälters zu messen, um einen Messwert des zumindest einen Behälterparameters zu erhalten, umfasst. Weiterhin umfasst die Vorrichtung eine Messkorrektureinrichtung, die dazu ausgebildet ist, den Messwert des zumindest einen Behälterparameters auf der Grundlage zumindest eines Modellparameters eines numerischen Modells (das insbesondere Störparameter der Messung und Umgebungsdaten berücksichtigen kann) zu korrigieren, und eine Performanceparameter-Ermittlungseinrichtung, die dazu ausgebildet ist, zumindest einen Performanceparameterwert (zumindest eines Performanceparameters) auf der Grundlage des korrigierten zumindest einen Messwerts zu ermitteln. Weiterhin ist die Steuerungseinrichtung dazu ausgebildet, die Herstellung zumindest eines zweiten Behälters, der von dem zumindest einen ersten Behälter verschieden ist, auf der Grundlage des auf der Grundlage des ermittelten zumindest einen Performanceparameterwerts angepassten zumindest einen Arbeitsparameters zu steuern.

Der zumindest eine Performanceparameter kann ebenfalls mithilfe eines Modells, das das oben genannte numerische Modell umfassen kann, auf der Grundlage des korrigierten zumindest einen Messwerts ermittelt werden.

Hier und im Weiteren wird der Ausdruck "Steuerungseinrichtung" so verwendet, dass er eine Steuerungs- und/oder Regeleinrichtung umfasst. Entsprechend umfasst hier der Ausdruck "steuern" steuern und/oder regeln.

Die Steuerungseinrichtung, Messkorrektureinrichtung und Performanceparameter-Ermittlungseinrichtung können zumindest teilweise logisch und/oder physikalisch voneinander getrennt oder miteinander integriert vorgesehen sein. Insbesondere kann die Messkorrektureinrichtung in der Performanceparameter-Ermittlungseinrichtung integriert sein.

Die Vorrichtung kann eine Blasmaschine, beispielsweise eine Rotationsblasmaschine, umfassen.

Der zumindest eine Arbeitsparameter kann aus der Gruppe ausgewählt sein, die einen Druck, mit dem ein Kunststoffvorformling beaufschlagt wird, einen Zeitpunkt und eine Zeitdauer der Druckbeaufschlagung und Bewegungsparameter einer Reckstange, mit der der Kunststoffvorformling gereckt wird, umfasst. Weiterhin kann diese Gruppe einen Regelparameter oder eine Stellgröße einer Heizeinrichtung umfassen, mit der ein Kunststoffvorformling erwärmt wird. Die Heizeinrichtung kann ein Infrarot-Ofen, Mikrowellenoffen oder Laserofen oder eine Kombination davon sein. Stellgrößen des Infrarot-Ofens umfassen beispielsweise die Heizleistung der einzelnen Heizstrahler oder eine Verstellung der Heizstrahler in ihrer Gesamtheit, das Aktivieren/Deaktivieren der einzelnen Heizstrahler, eine Kühlleistung (Oberflächenkühlung), die individuelle Anpassung der Kühlleistung entlang der Heizgasse in den einzelnen Heizkästen, die Reflektorverstellung, um die Heizgasse kleiner/größer machen zu können, beispielsweise indem man den Bodenreflektor nach oben fährt, die Eintauchtiefe des Heizdorns mit dem Kunststoffvorformling in der Heizgasse und die Verstellung des Fokusreflektors, um einen Energieeintrag unterhalb des Tragrings zu optimieren. Entsprechende Stellgrößen können von der Gruppe für einen Laserofen umfasst sein. Für einen Mikrowellenofen können von der Gruppe die Mikrowellenleistung, die Verstellung von Elementen im Applikator, um das Mikrowellenfeld zu beeinflussen und die Verstellung der Funktionselemente für die Profilierung als Stellgrößen umfasst sein.

Der zumindest eine Behälterparameter kann aus der Gruppe ausgewählt sein, die einen für eine Wanddicke des Behälters charakteristischen Parameter (beispielsweise die Wanddicke selbst oder ein Absorptions- oder Transmissionsvermögen - beispielsweise: umso dicker die Wand, desto mehr Licht eines Sensorstrahls wird absorbiert), einen Absorptionskoeffizienten des Materials des Behälters, einen Transmissionskoeffizienten des Materials des Behälters, eine Transluzenz des Materials des Behälters, ein Wanddickenprofil des Behälters, eine Temperatur des Behälters, eine Höhe des Behälters, einen Durchmesser des Behälters und Boden- und Seitenwandinspektionsmessdaten des Behälters, Offcenter-Detektionsdaten, Halsauszugsmessdaten, Informationsdaten aus der Produktionslinie, wie Zähler fehlerhafter Blasvorgang, geplatzter Flaschen am Füller, und verlorener Flaschen, und Füllstandskontrolldaten etc., umfasst. Das Messen des Behälterparameters kann ein direktes Messen oder ein Ermitteln über einen Messwert umfassen. Der zumindest eine Performanceparameter kann aus der Gruppe ausgewählt sein, die ein Topload, eine Bodenfreiheit, einen Burstpressure, einen Stresscrack, eine Materialverteilung und ein Sektionsgewicht umfasst.

Das numerische Modell kann zumindest eines von Informationen über Oberflächen (insbesondere Rillen, Facetten und andere Oberflächenelemente), Ausrichtungen, Geometrien der Behälter und Absorptions-/Transmissionskoeffizienten des Behältermaterials und Parameter von Vorformlingen der Behälter als den zumindest einen Modellparameter umfassen. Ebenso kann das das Modell Daten von Umgebungsparametern, wie eine Temperatur und eine Luftfeuchtigkeit, als den zumindest einen Modellparameter umfassen. Beispielsweise kann das Modell aus einer Vielzahl von Datenpunkt hergestellt sein, und es kann beispielsweise erlauben, eine Materialverteilung oder Segmentgewichte auf der Grundlage von gemessener Werten von einem oder mehreren Behälterparametern, die charakteristisch für Wanddicken sind, genau zu ermitteln. Insbesondere kann das Modell eine mathematische Berechnung des Performanceparameters auf der Grundlage des von dem Modell gelieferten korrigierten zumindest einen Messwerts erlauben. Physikalische Modelle, ein Expertensystem, Resultate aus einem Reverse Modeling, und Look-Up-Tables können von dem Modell umfasst sein.

Das numerische Modell kann allgemein Produktionsparameter und weiterer Metadaten, wie Preform-Einlauftemperatur, Stellparameter der Contiform, Klassifikationsdaten von Flaschen und Preforms, Chargeninformationen über die Vorformlinge (beispielsweise das Produktionsdatum), Objektzeichnungen oder beliebige Produktspezifikationsdaten berücksichtigen.

Der zumindest eine Arbeitsparameter kann auf der Grundlage des ermittelten zumindest einen Performanceparameterwerts beispielsweise von der Steuerungseinrichtung angepasst werden. Die Ermittlung des Performanceparameters aus dem korrigierten Messwert kann mittels eines Kalibrierungslauf validiert und angepasst werden.

Durch das Vorsehen der modellbasierten Korrektureinrichtung können gegenüber dem Stand der Technik genauere Werte für Performanceparameter modellbasiert ermittelt werden, die zur Anpassung der Arbeitsparameter des Herstellungsprozesses zur Optimierung desselben dienen können. Durch die modellbasierte Ermittlung der Performanceparameter und die auf der Grundlage dieser modellbasiert ermittelten Performanceparameter angepassten Arbeitsparameter können vorgegebene Qualitätskriterien verlässlich erfüllt werden.

Die Vorrichtung kann gemäß einer Weiterbildung ein künstliches neuronales Netz umfassen, das dazu ausgebildet ist, das Modell (insbesondere vor der Herstellung des zumindest einen ersten Behälters) zu erstellen. Ein lernfähiges neuronales Netz ist besonders geeignet, das zur Korrektur benötigte Modell zu erstellen. Weiterhin kann es auch on-the-fly während des eigentlichen Herstellungsprozesses weiter trainiert werden. Es kann also, dazu ausgebildet sein, das Modell auch nach der Herstellung des zumindest einen ersten und/oder des zumindest einen zweiten Behälters zu trainieren, um das Modell so weiter zu optimieren (beispielsweise durch dynamisches Anpassen von Korrekturparametern). Auch kann die Steuerungseinrichtung und/oder die Messkorrektureinrichtung und/oder die Performanceparameter-Ermittlungseinrichtung ein neuronales Netz umfassen. Allgemein kann eine neuronales netz der Performanceparameter-Ermittlungseinrichtung Transformationsabbildungen von den korrigierten Messwerten auf die Performanceparameterwerte erlernen und dynamisch adaptieren.

Weiterhin wird eine Abfüllanlage mit der Vorrichtung gemäß einem der oben beschriebenen Beispiele bereitgestellt. Die Abfüllanlage umfasst eine Reihe weiterer Maschinen, beispielsweise eine Füllmaschine, Etikettiermaschine und Verpackungsmaschine. Die Steuerungseinrichtung kann zur Steuerung sämtlicher Maschinen ausgebildet sein.

Die oben genannte Aufgabe wird auch durch Bereitstellen eines Verfahrens zur Herstellung von Behältern gelöst, das die Schritte umfasst: Bereitstellen eines auf der Grundlage zumindest eines Arbeitsparameters hergestellten Behälters, Messen zumindest eines Behälterparameters (beispielsweise einen für eine Wanddicke charakteristischen Parameter) des bereitgestellten Behälters, um einen Messwert des zumindest einen Behälterparameters zu erhalten, Korrigieren des Messwerts des zumindest einen Behälterparameters auf der Grundlage zumindest eines Modellparameters (beispielsweise mit Informationen über Oberflächen, Ausrichtungen, Geometrien der Behälter und Absorptions-/Transmissionskoeffizienten des Behältermaterials und Parameter von Vorformlingen des bereitgestellten Behälters) eines numerischen Modells, Ermitteln zumindest eines Performanceparameterwerts auf der Grundlage des korrigierten zumindest einen Messwerts, Anpassen des zumindest einen Arbeitsparameters auf der Grundlage des ermittelten zumindest einen Performanceparameterwerts und Herstellen der Behälter auf der Grundlage des angepassten zumindest einen Arbeitsparameters. Für das Modell und die verschiedenen Parameter gelten das oben Beschriebene. Wiederum kann das Ermitteln des zumindest einen Performanceparameterwerts auf der Grundlage des korrigierten zumindest einen Messwerts mithilfe eines Modells erfolgen, das das genannte numerische Modell umfassen kann.

Das Verfahren kann weiterhin das Erstellen des numerischen Modells mithilfe eines neuronalen Netzes umfassen. Das neuronale Netz kann auch nach dem Herstellen der Behälter auf der Grundlage des angepassten zumindest einen Arbeitsparameters (weiter) trainiert werden.

Im Folgenden werden Ausführungsformen einer erfindungsgemäßen Vorrichtung und eines erfindungsgemäßen Verfahrens unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht die Wirkung einer ungleichförmigen Behältergeometrie als Störparameter für die Messung eines Behälterparameters.
Figur 2 zeigt ein Blockdiagramm, das eine Vorrichtung zur Herstellung von Behältern gemäß einer Ausführungsform der vorliegenden Erfindung veranschaulicht.
Figur 3 zeigt eine beispielhafte Abfüllanlage, die die Vorrichtung zur Herstellung von Behältern gemäß einer Ausführungsform der vorliegenden Erfindung umfasst.

Die vorliegende Erfindung betrifft die Herstellung von Behältern. Erfindungsgemäß können Arbeitsparameter zur Herstellung der Behälter auf der Grundlage von Performanceparameterwerten angepasst werden, die auf der Grundlage von Messdaten ermittelt werden, die modellbasiert korrigiert wurden.

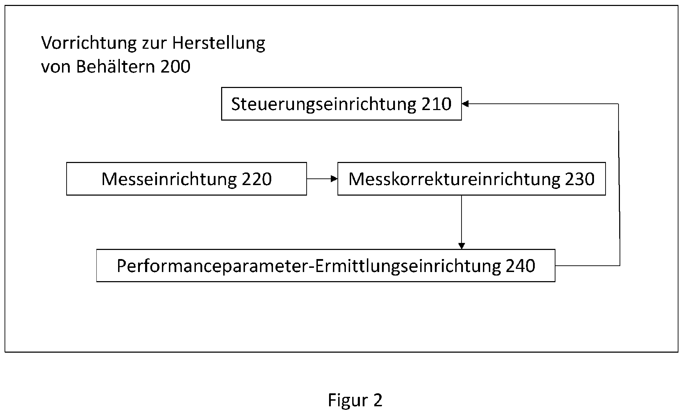

Figur 2 zeigt schematisch eine Vorrichtung 200 zur Herstellung von Behältern gemäß einer Ausführungsform Die Vorrichtung 200 kann beispielsweise eine Blasmaschine zur Ausbilden von Behältern aus Vorformlingen umfassen. Gemäß der in Figur 2 gezeigten Ausführungsform umfasst die Vorrichtung 200 zur Herstellung von Behältern eine Steuerungseinrichtung 210 zur Steuerung des Herstellungsprozesses, die dazu ausgebildet ist, Arbeitsparameter für die Herstellung der Behälter einzustellen. Die Arbeitsparameter können einen Druck, mit dem ein Kunststoffvorformling beaufschlagt wird, Zeitpunkt und -dauer der Druckbeaufschlagung und Bewegungsparameter einer Reckstange, mit der der Kunststoffvorformling gereckt wird, umfassen.

Die Vorrichtung 200 umfasst weiterhin eine Messeinrichtung 220, die dazu ausgebildet ist, zumindest einen Behälterparameterwert der Behälter (oder zumindest von einem der Behälter) zu ermitteln. Die Behälterparameter können einen für eine Wanddicke des Behälters charakteristischen Parameter (beispielsweise die Wanddicke selbst oder ein Absorptions- oder Transmissionsvermögen beziehungsweise eine Absorption(smenge) oder Transmissions(menge)), einen Absorptionskoeffizienten des Materials des Behälters, einen Transmissionskoeffizienten des Materials des Behälters, ein Wanddickenprofil des Behälters und Bodeninspektionsmessdaten des Bodens des Behälters umfassen.

Weiterhin umfasst die Vorrichtung 200 eine Messkorrektureinrichtung 230, die dazu ausgebildet ist, von der Messeinrichtung gelieferte Messwerte des zumindest einen Behälterparameters auf der Grundlage zumindest eines Modellparameters eines numerischen Modells zu korrigieren. Der zumindest eine Modellparameter kann zumindest eines von Informationen über Oberflächen, Ausrichtungen, Geometrien der Behälter und Absorptions-/Transmissionskoeffizienten des Behältermaterials und Parameter von Vorformlingen der Behälter als den zumindest einen Modellparameter umfassen.

Das numerische Modell kann durch eine Künstliche Intelligenz (Kl)/neuronale Netz erzeugt werden. Die Messkorrektureinrichtung 230 kann eine solche künstliche Intelligenz beziehungsweise ein solches neuronales Netz umfassen.

Unter neuronalen Netzen können Werkzeuge verstanden werden, die geeignet sind, beliebige nichtlineare Funktionen und somit auch Regeln beispielsweise der Fuzzy-Logik nachzubilden, falls diese Funktionen anhand von Beispielen vorliegen, die zum Trainieren des neuronalen Netzes verwendet werden können. Aus einer großen Anzahl von Beispielen können Regelmäßigkeiten und somit Gewichte der neuronalen Netze, erlernt/trainiert werden, die dann mithilfe vorgegebener aber auch wiederum anpassbarer Regeln, beispielsweise unscharfer Fuzzy-Mengen und Regeln, ausgedrückt werden. Die Kombination von Fuzzy-Reglern mit neuronalen Netzen erlaubt das intelligente lernbedingt Aufstellen und Parametrisieren der Fuzzy-Regeln.

Das neuronale Netz kann einen Transformer und/oder eines von einem Deep-(Learning)-Neuronalen Netz, Multilayer Perceptron, Convolutional-Neuronalen Netz und Rekurrenten Neuronalen Netz. Das Deep-(Learning)-Neuronale Netz zeichnet sich durch eine Mehrzahl verborgener Schichten aus. Eine Maschine wird durch Deep Learning in die Lage versetzt, selbstständig und ohne menschliches Zutun ihre Fähigkeiten zu verbessern und Entscheidungen zu treffen, indem aus vorhandenen Daten und Informationen Muster extrahiert und klassifiziert werden. Die gewonnenen Erkenntnisse lassen sich wiederum mit Daten korrelieren und in einem weiteren Kontext verknüpfen. Schließlich ist die Maschine fähig, Entscheidungen auf Basis der Verknüpfungen zu treffen. Durch kontinuierliches Hinterfragen der Entscheidungen erhalten die Informationsverknüpfungen bestimmte Gewichtungen. Bestätigen sich Entscheidungen, erhöht sich deren Gewichtung, werden sie revidiert, verringert sich die Gewichtung. Zwischen der Eingabeschicht und der Ausgabeschicht gibt es immer mehrere verborgene Zwischenschichten und Verknüpfungen. Über die eigentliche Ausgabe entscheidet die Anzahl der Zwischenschichten und deren aktualisierte Verknüpfung. Das Multilayer Perzeptron stellt ein relativ einfaches, robust arbeitendes Neuronales Netz dar, in dem sämtliche Knoten vollverbunden sind. Das Convolutional-Neuronale Netz basiert statt auf Matrixmultiplikation auf Faltungen. Das Rekurrente Neuronale Netz erlaubt Rückkopplungen einer neuronalen Schicht zu einer vorhergehenden. Ein Transformer weist weder eine Convolutional-Neuronales Netz noch ein Rekurrentes Neuronales Netz auf, sondern basiert auf dem Konzept der Selbstaufmerksamkeit. Der Transformer kann jedoch mit einem Convolutional-Neuronalen Netz oder einem Rekurrenten Neuronalen Netz zusammenwirken.

Weiterhin umfasst die Vorrichtung 200 eine Performanceparameter-Ermittlungseinrichtung 240, die dazu ausgebildet ist, zumindest einen Performanceparameterwert auf der Grundlage des korrigierten zumindest einen Messwerts/Behälterparameterwerts zu ermitteln. Der zumindest eine Performanceparameter kann ein Topload, eine Bodenfreiheit, einen Burstpressure, einen Stresscrack, eine Materialverteilung und ein Sektionsgewicht umfassen. Die Ermittlung des zumindest einen Performanceparameterwerts erfolgt ebenfalls modellbasiert, beispielsweise auf der Grundlage eines Modells, das das oben genannte numerische Modell umfasst.

Die Steuerungseinrichtung 210 der Vorrichtung 200 ist weiterhin dazu ausgebildet, die Herstellung weiterer Behälters auf der Grundlage des auf der Grundlage des ermittelten zumindest einen Performanceparameterwerts angepassten zumindest einen Arbeitsparameters zu steuern. Die Steuerung der Herstellung der weiteren Behälter erfolgt also basierend auf sehr genauen modellkorrigierten Messwerten und draus gewonnenen modellbasiert ermittelten Performanceparameterwerten, sodass der Herstellungsprozess sehr feinjustiert optimiert werden kann.

Beispielsweise kann ein für eine Wanddicke des Behälters charakteristischer gemessener Parameterwert mithilfe eines Modells korrigiert werden, dass zumindest Informationen über die Geometrie des Behälters und seine Ausrichtung während der Messung bereitstellt. So verläuft etwa ein zur Messung verwendeter Infrarotstrahl, der senkrecht auf eine Seitenwand eines Behälters auftritt, durch weniger Behältermaterial als ein Infrarotstrahl, der unter einem Winkel ungleich 90° auf einen konisch zulaufenden Kopfbereich desselben Behälters auftrifft. Diese Situation und der daraus resultierende Messfehler können durch das Modell berücksichtigt und korrigiert werden. Der korrigierte für die Wanddicke des Behälters charakteristische Parameterwert (beispielsweise eine Absorption(smenge) eines Infrarotstrahls umfassend) kann dann zur Ermittlung der Materialverteilung oder Segmentgewichte verwendet werden, die ebenfalls modellbasiert erfolgt.

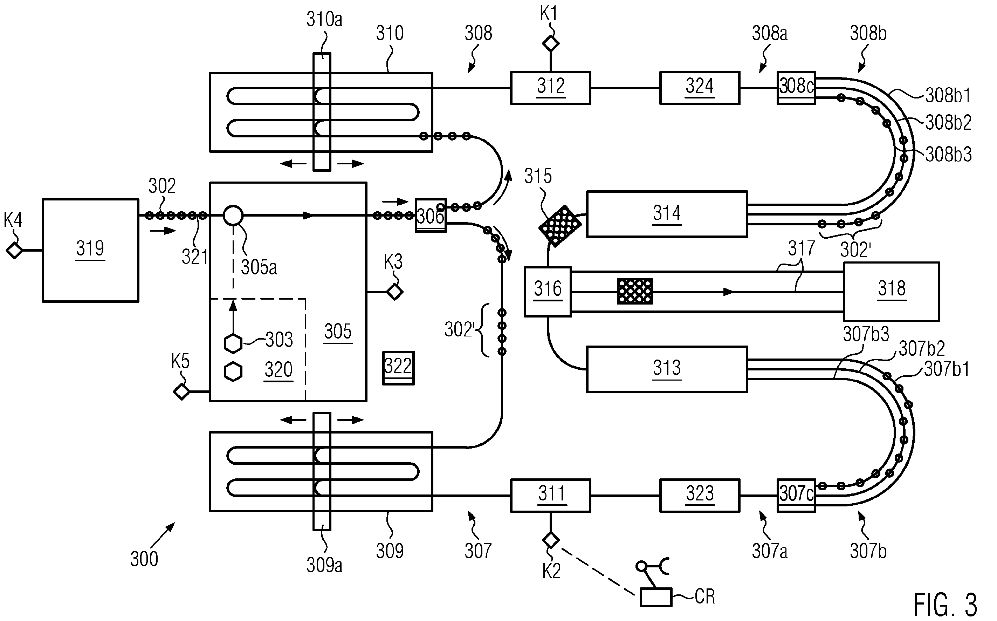

Eine beispielhafte Abfüllanlage 300, die die in Figur 2 gezeigte Vorrichtung 200 zur Herstellung von Behältern enthalten kann, ist in Figur 3 dargestellt. Die Abfüllanlage 300 zum Befüllen von Behältern 302, 303, beispielsweise Kunststoffflaschen, mit einem flüssigen Produkt, wie beispielsweise einem Getränk oder dergleichen, umfasst eine Füllmaschine 305 zum Befüllen und Verschließen der Behälter 302, 303 und eine stromabwärts der Füllmaschine 305 vorgesehene Verteileinrichtung 306 zum Verteilen der Behälter 302, 303 auf zwei getrennt steuerbare Transportstrecken 307, 308, in denen jeweils wenigstens ein Behälterpuffer 309, 310 mit verstellbaren Behälterführungen 309a, 310a vorgesehen ist. Den Behälterpuffern 309, 310 nachgeschaltet sind Etikettiermaschinen 311, 312 sowie Verpackungsmaschinen 313, 314 zum Herstellen von Behältergebinden 315. Diese werden einer Sammel- und Verteileinrichtung 316 zugeführt, so dass die Behältergebinde 315 auf stromabwärts der Sammel- und Verteileinrichtung 316 vorgesehene Sortierspuren 317 verteilt werden und einer Kommissioniereinrichtung 318 zugeführt werden können.

Die Transportstrecken 307, 308 umfassen jeweils erste eingangsseitige Abschnitte 307a, 308a, die einspurig und für den drucklosen Transport der Behälter 302, 303 ausgebildet sind. Ferner umfassen die Transportstrecken 307, 308 ausgangsseitige zweite Abschnitte 307b, 308b, die jeweils mehrspurig für den drucklosen Transport der Behälter 302, 303 ausgebildet sind. Für die Verteilung der Behälter 302, 303 von dem einspurigen ersten Abschnitt 307a, 308a auf die einzelnen Spuren des zweiten Abschnitts 307b, 308b, die beispielsweise in Form separater Gassen 307b1 bis 307b3, 308b1 bis 308b3 ausgebildet sind, sind Weichen 307c, 308c oder entsprechende Verteileinrichtungen vorgesehen.

Weiterhin umfasst die Abfüllanlage 300 zwei Vorrichtungen zur Herstellung von Behältern 319, 320 in Form von Blasmaschinen 319, 320. Im gezeigten Beispiel sind getrennte Blasmaschinen 319, 320 zum Herstellen unterschiedlicher Behälter 302, 303, beispielsweise Behälter unterschiedlicher geometrischer Formen, vorgesehen. Es kann wenigstens eine der Blasmaschinen 319, 320 über eine eingangsseitige Transportstrecke 321 mit der Füllmaschine 3055 verbunden sein. Über eine eingangsseitige Weiche 305a können unterschiedliche einlaufende Behälterströme der weiteren Verarbeitung zugeführt werden können. Weitere Produktionseinheiten 323, 324 können etwa in Form von Schrumpftunneln vorgesehen sein.

Für die Steuerung der erfindungsgemäßen Abfüllanlage 300 ist eine zentrale Steuerungs-/Regelungseinrichtung 322 vorgesehen, die insbesondere mit der Verteileinrichtung 306, den Behälterpuffern 309, 310, den Etikettiermaschinen 311, 312 und Produktionseinheiten stromaufwärts der Verteileinrichtung 306, wie beispielsweise der Füllmaschine 305 und den Blasmaschinen 319, 320 kommuniziert. Die zentrale Steuerungs-/Regelungseinrichtung 322 kann der Steuerungseinrichtung 210 der in Figur 2 gezeigten Vorrichtung 200 entsprechen beziehungsweise diese umfassen.

In dem gezeigten Beispiel sind die Etikettiermaschinen 311, 312 mit eigenen Kommunikations- und Steuereinrichtungen K1, K2, die Füllmaschine 305 mit einer eigenen Kommunikations- und Steuereinrichtung K3 und die Blasmaschinen 319, 320 mit eigenen Kommunikations- und Steuereinrichtungen K4, K5 verbunden. Jede der Kommunikations- und Steuereinrichtungen K1, K2, K3, K4, erlaubt über ein geeignetes Interface eine Bedienung der entsprechenden Maschine durch einen Benutzer. Gemäß einem Beispiel umfasst Kommunikations- und Steuereinrichtung K4 oder K5 die Steuerungseinrichtung 210 der in Figur 2 gezeigten Vorrichtung 200. Die Kommunikations- und Steuereinrichtungen K1, K2, K3, K4, K5 sind den jeweiligen Maschinen der Abfüllanlage 300 logisch zugeordnet. Natürlich können sämtliche Maschinen der Abfüllanlage 300 mit eigenen Kommunikations- und Steuereinrichtungen ausgestattet sein, und es können die Kommunikations- und Steuereinrichtungen untereinander vernetzt sein, sodass sie sich über Betriebszustände der Maschinen und Anforderungen der Bedienpersonen austauschen können. Allgemein kann aus Sicherheitsgründen die Vernetzung der Kommunikations- und Steuereinrichtung mit den anderen Maschinen, mobilen kollaborativen Robotern (CR), aber auch Smartphones der Bedienpersonen, etc. auf einen definierten internen Bereich (beispielsweise in Form eines firmeneigenen Netzes) beschränkt werden und gleichzeitig ein Austausch im Internet zum selbständigem Lernen des Kommunikations- und Steuereinrichtung, beispielsweise hinsichtlich einer Spracherkennung oder Sprecheridentifikation ermöglicht werden.

Die zentrale Steuerungs-/Regelungseinrichtung 322 ist mit den Kommunikations- und Steuereinrichtungen K1, K2, K3, K4, K5 verbunden und kann die Koordination der Maschinen und Transporttechnik zumindest teilweise, beispielsweise bei der Organisation der Anlagenproduktion und der Sortenumstellung der Produkte übernehmen. Logisch und/oder physikalisch kann jeder Maschine eine Kommunikations- und Steuereinrichtungen K1, K2, K3, K4, K5zugeordnet werden. Eine Bedienperson kann über die Kommunikations- und Steuereinrichtungen K1, K2, K3, K4, K5, beispielsweise mithilfe von Spracheingaben und Sprachdialogen, die jeweiligen Maschinen bedienen. Die Kommunikations- und Steuereinrichtungen K1, K2, K3, K4, K5 können Anzeigevorrichtungen, die bei den Maschinen positioniert sind, zum Anzeigen von Informationen verwenden. Implementierungen mit zentralen und verteilten Datenverarbeitungen und Datenbanken, auf die die zentrale Steuerungs-/Regelungseinrichtung 322 und die Kommunikations- und Steuereinrichtungen K1, K2, K3, K4, K5 zugreifen können, sind möglich.

## Patentansprüche

1. Vorrichtung (200, 319, 320) zur Herstellung von Behältern (302, 303), umfassend
eine Steuerungseinrichtung (210, K4, K5), die dazu ausgebildet ist, zumindest einen Arbeitsparameter für die Herstellung zumindest eines ersten Behälters (302, 303) einzustellen;
eine Messeinrichtung (220), die dazu ausgebildet ist, zumindest einen Behälterparameter des zumindest einen hergestellten ersten Behälters (302, 303) zu messen, um einen Messwert des zumindest einen Behälterparameters zu erhalten;
eine Messkorrektureinrichtung (230), die dazu ausgebildet ist, den Messwert des zumindest einen Behälterparameters auf der Grundlage zumindest eines Modellparameters eines numerischen Modells zu korrigieren;
eine Performanceparameter-Ermittlungseinrichtung (240), die dazu ausgebildet ist, zumindest einen Performanceparameterwert auf der Grundlage des korrigierten zumindest einen Messwerts zu ermitteln;
und wobei
die Steuerungseinrichtung (210, K4, K5), dazu ausgebildet ist, die Herstellung zumindest eines zweiten Behälters (302, 303), der von dem zumindest einen ersten Behälter (302, 303) verschieden ist, auf der Grundlage des auf der Grundlage des ermittelten zumindest einen Performanceparameterwerts angepassten zumindest einen Arbeitsparameters zu steuern.

2. Die Vorrichtung (200, 319, 320) gemäß Anspruch 1, die weiterhin ein neuronales Netz umfasst, das dazu ausgebildet ist, das Modell zu erstellen.

3. Die Vorrichtung (200, 319, 320) gemäß Anspruch 2, in der das neuronale Netz dazu ausgebildet ist, das Modell nach der Herstellung des zumindest einen ersten und/oder des zumindest einen zweiten Behälters (302, 303) zu trainieren.

4. Die Vorrichtung (200, 319, 320) gemäß einem der vorhergehenden Ansprüche, in der die Messeinrichtung (220), dazu ausgebildet ist, einen für eine Lichttransmission, insbesondere eine Wanddicke des ersten Behälters (302, 303), charakteristischen Parameter zu messen.

5. Die Vorrichtung (200, 319, 320) gemäß einem der vorhergehenden Ansprüche, in der das Modell zumindest eines von Informationen über Oberflächen, Ausrichtungen, Geometrien der Behälter (302, 303) und Absorptions-/Transmissionskoeffizienten des Behältermaterials und Parameter von Vorformlingen der Behälter (302, 303) als den zumindest einen Modellparameter umfasst.

6. Verfahren zur Herstellung von Behältern (302, 303), mit den Schritten:
Bereitstellen eines auf der Grundlage zumindest eines Arbeitsparameters hergestellten Behälters (302, 303);
Messen zumindest eines Behälterparameters des bereitgestellten Behälters (302, 303), um einen Messwert des zumindest einen Behälterparameters zu erhalten;
Korrigieren des Messwerts des zumindest einen Behälterparameters auf der Grundlage zumindest eines Modellparameters eines numerischen Modells;
Ermitteln zumindest eines Performanceparameterwerts auf der Grundlage des korrigierten zumindest einen Messwerts;
Anpassen des zumindest einen Arbeitsparameters auf der Grundlage des ermittelten zumindest einen Performanceparameterwerts; und
Herstellen der Behälter (302, 303) auf der Grundlage des angepassten zumindest einen Arbeitsparameters.

7. Das Verfahren gemäß Anspruch 6, weiterhin mit Erstellen des numerischen Modells mithilfe eines neuronalen Netzes.

8. Das Verfahren gemäß Anspruch 7, weiterhin mit Trainieren des neuronalen Netzes nach dem Herstellen der Behälter (302, 303) auf der Grundlage des angepassten zumindest einen Arbeitsparameters.

9. Das Verfahren gemäß einem der Ansprüche 6 bis 8, in dem der Behälterparameter ein für eine Lichttransmission, insbesondere eine Wanddicke des Behälters (302, 303), charakteristischer Parameter ist.

10. Das Verfahren gemäß einem der Ansprüche 6 bis 9, in der das Modell zumindest eines von Informationen über Oberflächen, Ausrichtungen, Geometrien der Behälter (302, 303) und Absorptions-/Transmissionskoeffizienten des Behältermaterials und Parameter von Vorformlingen der Behälter (302, 303) als den zumindest einen Modellparameter umfasst.
